# EUROPÄISCHE PATENTSCHRIFT

(11) **EP 2 513 872 B1**
(45) Veröffentlichungstag und Bekanntmachung des Hinweises auf die Patenterteilung: **26.02.2014**
(21) Anmeldenummer: 10790927.7
(22) Anmeldetag: 08.12.2010
(51) Int. Cl.: G07C 5/00, G07C 5/02, G07C 7/00, G01P 1/12

(54) **FAHRTSCHREIBER**
TACHOGRAPH
TACHYGRAPHE

(30) Priorität: 14.12.2009 DE 102009058075
(43) Veröffentlichungstag der Anmeldung: 24.10.2012
(73) Patentinhaber: Continental Automotive GmbH, 30165 Hannover (DE)
(72) Erfinder: KLOSTERMEIER, Dieter, 78050 Villingen-Schwenningen (DE); WAHLER, Torsten, 78073 Bad Dürrheim (DE)
(86) Internationale Anmeldenummer: PCT/EP2010/069198
(87) Internationale Veröffentlichungsnummer: WO 2011/073068

(56) Entgegenhaltungen:
- DE-A1- 2 328 489
- DE-A1- 10 215 122
- DE-A1-102005 056 605
- DE-A1-102008 007 371
- DE-B- 1 090 888
- DE-U1- 29 912 060
- US-A- 4 937 408
- "Hauptkatalog Conrad Electronic 2007/2008", 1. August 2007 (2007-08-01), Conrad Electronic, Hirschau, XP002622807, Seite 1610, Seite 1610

## Beschreibung

Die Erfindung bezieht sich auf einen Fahrtschreiber mit einem Gehäuse, in dem eine Druckvorrichtung und eine Aufnahmekammer für eine Rolle eines von der Druckvorrichtung bedruckbaren bandartigen Druckmaterials angeordnet ist, wobei die Aufnahmekammer eine zu einer Bedienerseite des Fahrtschreibers öffnenbare Bestückungsöffnung aufweist, die durch einen Deckel verschließbar ist, an dem mindestens ein von der Bedienerseite her betätigbares, beleuchtbares Betätigungselement angeordnet ist.

Bei derartigen Fahrtschreibern ist es bekannt auf der Rückseite des Betätigungselements Leuchtdioden anzuordnen, durch die eine Hinterleuchtung des Betätigungselements erfolgt.

Die DE 102 15 122 A1 zeigt einen Fahrtschreiber mit Gehäuse, Druckvorrichtung, Aufnahmekammer für eine Papierrolle und Bedienelement an der Frontseite.
Aufgabe der Erfindung ist es einen Fahrtschreiber der eingangs genannten Art zu schaffen, der einen einfachen Aufbau aufweist.

Diese Aufgabe wird erfindungsgemäß durch die Merkmale des Anspruchs 1 gelöst.

Damit kann auf separate Bestromungszuleitungen und Lichtquellen am Deckel verzichtet werden, so dass dieser auf einfachere Art montierbar ist.

Ist das emittierte Licht der ersten Lichtquelle bei geöffnetem Deckel in die Aufnahmekammer geleitet, so erfolgt durch dieselben Lichtquellen gleichzeitig sowohl eine Beleuchtung des am Deckel angeordneten Betätigungselements als auch der Aufnahmekammer für das bedruckbare Bedruckmaterial. Damit ist es einem Bediener erleichtert eine neue Rolle Druckmaterial korrekt in die geöffnete Aufnahmekammer einzulegen, da er die beleuchtete Aufnahmekammer gut einsehen kann.

Das Betätigungselement kann dabei ein Druckschalter wie z.B. eine sogenannte Navigationstaste sein, die ein Wippschalter ist und ein pendelnd angeordnetes Mehrfachbeaufschlagungselement für mehrere Schaltelemente aufweist.

Es versteht sich, dass auch mehrere auf die gleiche Art beleuchtbare Betätigungselemente oder auch durchleuchtbare Bereiche an dem Deckel vorgesehen sein können.

In einfacher weise können die ersten Lichtquellen bei geschlossenem Deckel einer Einkoppelstelle einer an dem Deckel angeordneten, zu dem Betätigungselement führenden Lichtführung gegenüber liegen, so dass das Licht der ersten Lichtquelle abhängig von der Position des Deckels zum Betätigungselement geleitet wird.

Bei geöffnetem Deckel können dann die ersten Lichtquellen auf die Aufnahmekammer gerichtet sein.

Eine leichte Vormontage und gute Lichtführung ist dadurch möglich, dass die Lichtführung ein in den Deckel integrierter oder an dem Deckel angeordneter Lichtleiter ist.

Der vorzugsweise aus einem transparenten Werkstoff bestehende und an seinen äußeren Flächen polierte Lichtleiter kann Umlenkflächen aufweisen und in mehrere Lichtleitstränge sich aufteilen so dass das an einer Einkoppelfläche eingekoppelte Licht der ersten Lichtquelle aufgeteilt mehreren Auskoppelstellen zugeleitet werden kann. Dies reduziert den Aufwand an Lichtquellen.

Eine einzige Lichtführung zur Beleuchtung mehrerer Bereiche des Betätigungselements ist dadurch möglich, dass die Lichtführung eine oder mehrere Auskoppelstellen aufweist, die auf der der Bedienerseite abgewandten Seite auf ein oder mehrere zur Bedienerseite hin transparent durchleuchtbare Bereiche des Betätigungselements gerichtet sind.

Der Deckel kann eine um eine Schwenkachse schwenkbare Verschlussklappe sein oder an einem schubladenartigen Träger angeordnet sein, der zur Bedienerseite hin aus einem Aufnahmeschacht des Gehäuses herausbewegbar ist.

Die Ausbildung als schubladenartiger Träger führt zu einer besonders guten Zugänglichkeit zum Bestücken der Aufnahmekammer.

Zum direkten Einleiten des Lichts der ersten Lichtquelle in die Aufnahmekammer bei geöffnetem Deckel weist vorzugsweise der schubladenartige Träger in Bewegungsrichtung des Trägers gerichtete Seitenwände auf, wobei in einer der Seitenwände ein durchgehender Beleuchtungsschacht ausgebildet ist, der bei geöffnetem Deckel den an dem Aufnahmeschacht angeordneten ersten Lichtquellen gegenüberliegt.

Bei geschlossenem Deckel kann die erste Lichtquelle einer Einkoppelstelle des am Deckel angeordneten Lichtleiters gegenüberliegen und über diesen das Betätigungselement hinterleuchten.

Weist der Fahrtschreiber eine durchleuchtbare Bereiche aufweisende Blende und/oder ein Display und/oder eine Betätigungsschaltereinheit mit Betätigungsschaltern auf, die zur Bedienerseite hin von einer oder mehreren auf einer Leiterplatte angeordneten weiteren Lichtquellen transmissiv beleuchtbar sind, wobei die Leiterplatte sich bis nahe der Aufnahmekammer erstreckt und die ersten Lichtquellen auf der Leiterplatte angeordnet ist, so sind alle Lichtquellen des Fahrtschreibers auf einer einzigen Leiterplatte angeordnet, die auch noch die Ansteuerelektronik des Displays und/oder die Betätigungsschalter tragen kann. Dies reduziert den Montage- und Logistikaufwand.

Durch das Betätigungselement können ein oder mehrere flexible Schaltdome einer auf der der Bedienerseite abgewandten Seite des Betätigungselements an dem Deckel angeordneten Schaltmatte beaufschlagbar sein.

Besteht dabei die Schaltmatte aus einem transparenten Werkstoff und ist das Licht der ersten Lichtquellen durch die Schaltmatte dem Betätigungselement zuleitbar, bildet die aus einem elektrisch isolierenden Werkstoff bestehende Schaltmatte einen IP-Schutz (Internal Protection) gegen ein Eindringen von aggressiven Medien sowie von Nässe und Fremdkörpern wie z. B. Staub.

Ein Ausführungsbeispiel der Erfindung ist in der Zeichnung dargestellt und wird im Folgenden näher beschrieben. Es zeigen:

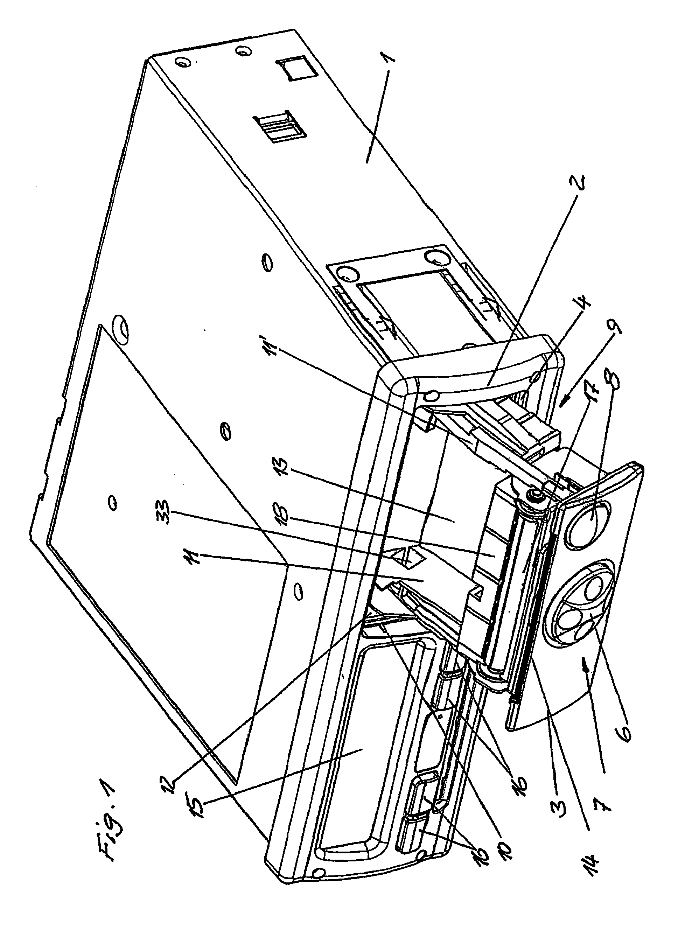

- Figur 1: eine perspektivische Ansicht eines Fahrtschreibers mit geöffnetem Deckel,

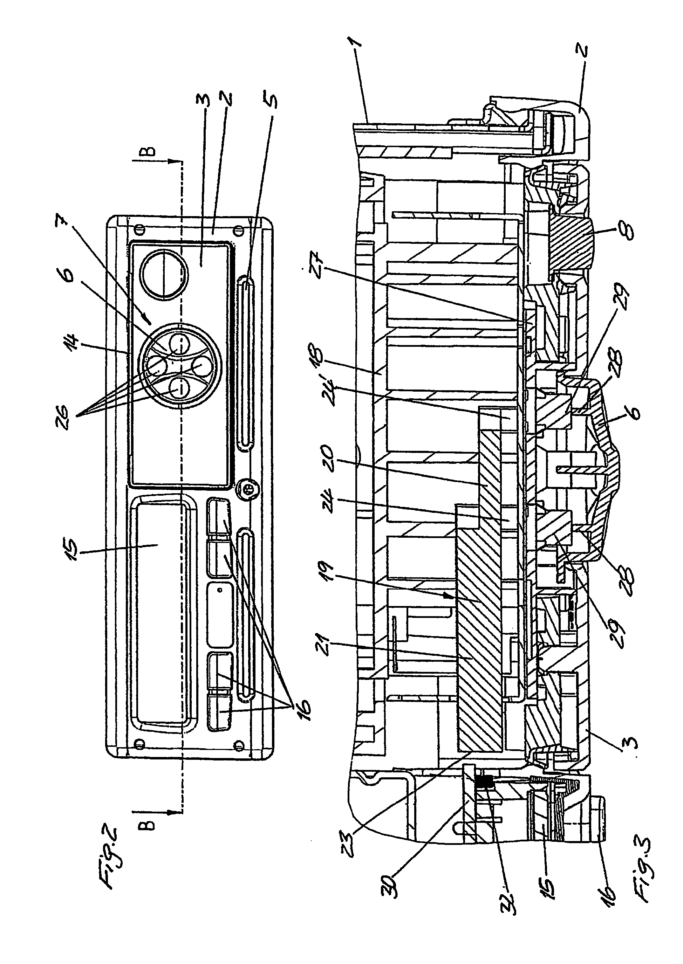

- Figur 2: eine Frontansicht des Fahrtschreibers nach Figur 1,
- Figur 3: einen vergrößerten Teilschnitt entlang der Linie B - B in Figur 2,

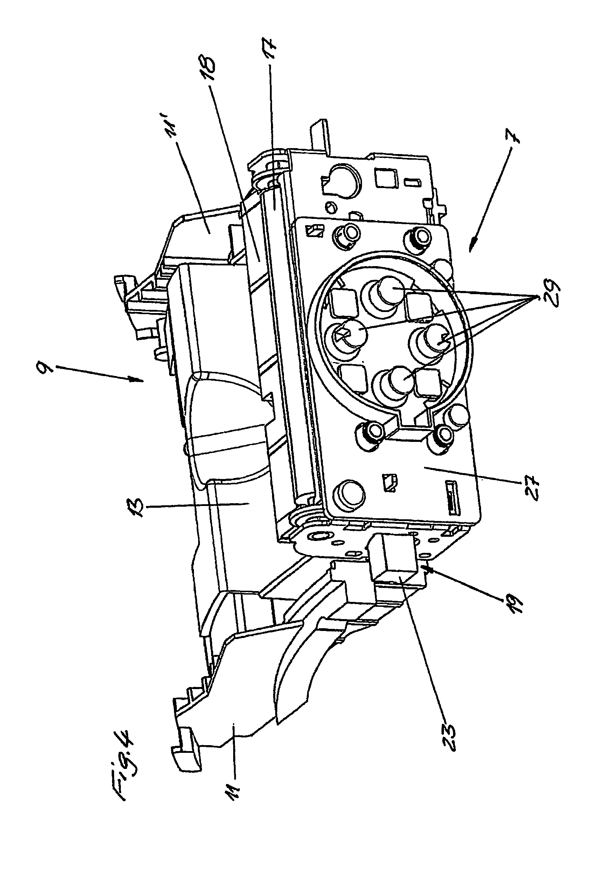

- Figur 4: eine perspektivische Ansicht auf einen schubladenartigen Träger des Fahrtschreibers nach Figur 1 mit entferntem Deckel,

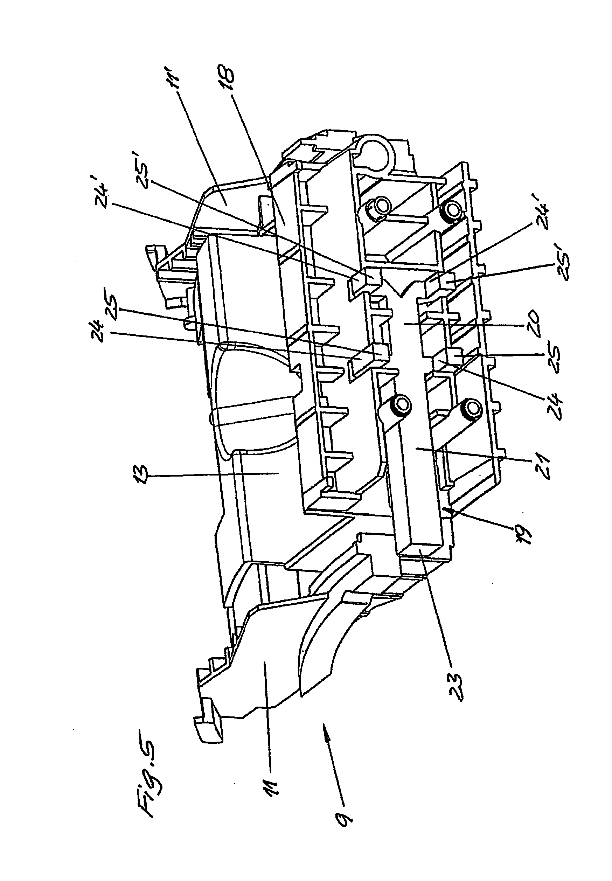

- Figur 5: eine perspektivische Ansicht auf den schubladenartigen Träger nach Figur 4 mit entferntem Deckel und entfernter Schaltmatte,

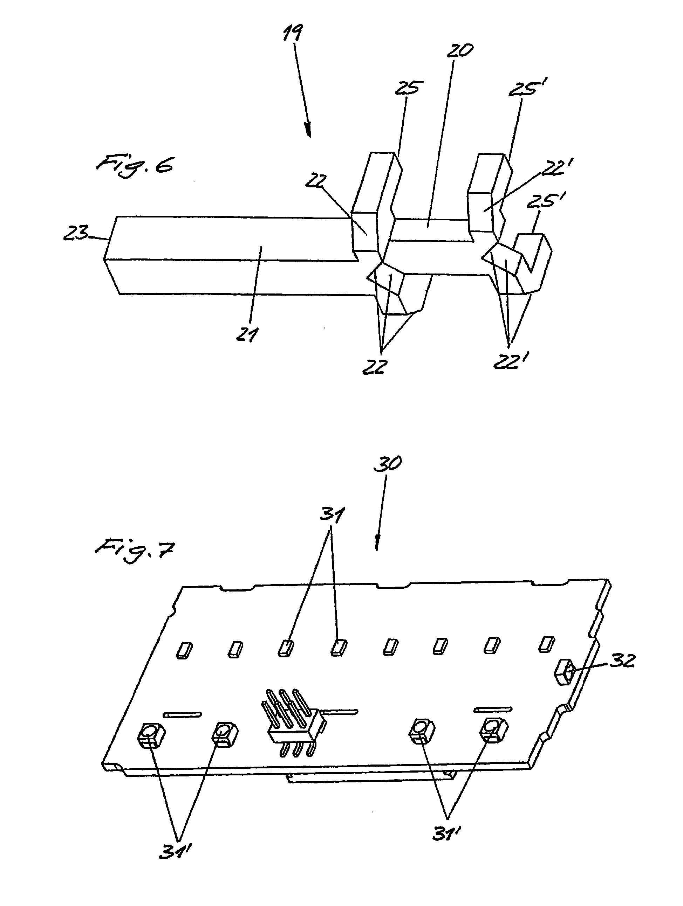

- Figur 6: eine perspektivische Ansicht eines Lichtleiters des Fahrtschreibers nach Figur 1 und
- Figur 7: eine perspektivische Ansicht einer Leiterplatte des Fahrtschreibers nach Figur 1.

Der in den Figuren dargestellte Fahrtschreiber weist ein Gehäuse 1 mit einem rechteckigen Querschnitt in DIN-Radioformat auf und ist in einem entsprechenden Schacht in einer Armaturentafel eines Kraftfahrzeugs einsetzbar.

Auf der Bedienerseite weist das Gehäuse 1 eine Blende 2 auf, die auf ihrer rechten Seite eine durch einen Deckel 3 verschließbare Bestückungsöffnung 4 besitzt.

Unterhalb der Bestückungsöffnung 4 ist in der Blende 2 ein Einführschlitz 5 ausgebildet, in den eine Chipkarte einführbar ist, die Speicherchips zum Speichern von Fahrer-, Fahrzeug- und Arbeitsdaten enthält.

Mittig ist am Deckel 3 ein topfartiges Betätigungselement 6 eines Wippschalters 7 angeordnet, durch den sich verschiedene Funktionen und -Datenspeicher anwählen lassen.

Rechts neben dem Wippschalter 7 ist ein knopfartiges Bedienungselement 8 einer Verriegelungseinheit angeordnet, durch das der Deckel 3 in seiner geschlossenen Position arretiert ist.

Der Deckel 3 ist an einem schubladenartigen Träger 9 angeordnet, der zur Bedienerseite hin aus einem Aufnahmeschacht 10 des Gehäuses 1 herausbewegbar ist.

Der Träger besitzt zwei einander gegenüberliegende Seitenwände 11, 11', mit denen er an Schachtwänden 12 des Aufnahmeschachts 10 verschiebbar geführt ist.

In Ausschubrichtung ist der Träger 9 von einer nicht dargestellten Feder beaufschlagt.

Bei teilweise aus dem Aufnahmeschacht 10 herausbewegtem Träger 9 wird eine Aufnahmekammer 13 des Trägers 9 von außen zugänglich, in die eine Rolle bandartigen Druckmaterials einsetzbar ist, das von einer nicht dargestellten, am Gehäuse 1 angeordneten Druckvorrichtung mit Fahrer-, Fahrzeug-, Fahrt-und Arbeitszeitdaten bedruckbar ist.

Das freie Ende der Rolle des Druckmaterials ist mittels einer am Träger 9 angeordneten Transportwalze 17 durch einen Druckmaterialschlitz 14 im oberen Randbereich des Deckels 3 nach außen transportierbar.

Links neben dem Aufnahmeschacht 13 ist in der Blende 2 eine Rechteckausnehmung ausgebildet, hinter der ein transmissiv beleuchtbares Display 15 angeordnet ist.

In einer Reihe nebeneinander sind unter dem Display vier Öffnungen in der Blende 2 ausgebildet, durch die Tasten 16 von Tastschaltern nach außen ragen.

Der Träger 9 weist an seinem zur Bedienerseite gerichteten Ende einen Grundkörper 18 auf, der die beiden Seitenwände 11, 11' miteinander verbindet und an dem der Deckel 3 sowie der Wippschalter 7 befestigt ist.

Weiterhin ist an dem Grundkörper 18 ein Lichtleiter 19 befestigt, der sich quer zur Bewegungsrichtung des Trägers 9 und an seinem einen bis zum linken seitlichen Rand des Trägers 9 reichenden stirnseitigen Ende eine Einkoppelstelle 23 für Licht aufweist.

Der rechte Endbereich 20 des Lichtleiters 19 besitzt einen reduzierten Querschnitt.

An dem Übergang von dem Bereich 21 größeren Querschnitts zum Endbereich 20 geringeren Querschnitts weist der Lichtleiter 19 Umlenkflächen 22 auf, an denen ein Teil des an der Einkoppelstelle 23 in den Lichtleiter 19 eingekoppelten Licht in sich quer zur Längserstreckung des Lichtleiters 19 gerichtete Lichtleitarme 24 umgelenkt und an deren Auskoppelstellen 25 bildenden Enden quer zur Längserstreckung des Lichtleiters 19 auskoppelbar ist.

In gleicher Weise sind an dem freien Ende des Endbereichs 20 Umlenkflächen 22' ausgebildet, an denen der andere Teil des eingekoppelten Lichts in sich quer zur Längserstreckung des Lichtleiters 19 gerichtete Lichtleitarme 24' umgelenkt und an deren Auskoppelstellen 25' bildenden Enden quer zur Längserstreckung des Lichtleiters 19 auskoppelbar ist.

Die zur Bedienerseite gerichteten vier Auskoppelstellen 25, 25' sind mit Abstand zueinander in einem Quadrat die Ecken bildend angeordnet und sind zu entsprechenden vier transparenten Fenstern 26 des Betätigungselements 6 gerichtet.

Eine Schaltmatte 27 aus einem transparenten Material erstreckt sich zwischen dem Lichtleiter 19 sowie seinen Auskoppelstellen 25, 25' und dem Betätigungselement 6.

Das Betätigungselement 6 ist wippbar in einer Öffnung des Deckels 3 gelagert und weist vier zur Rückseite des Deckels 3 ragende Zapfen 28 auf, durch die zwischen den Auskoppelstellen 25, 25' an der Schaltmatte 27 angeordnete Schaltdome 29 von Schaltern des Wippschalters 7 beaufschlagbar sind.

Hinter dem Display 15 und den Tasten 16 ist parallel zum Display 15 eine Leiterplatte 30 angeordnet, auf der außer einem nicht dargestellten Leitermuster Leuchtdioden 31, 31' angeordnet sind.

Davon bilden acht in einer Reihe nebeneinander angeordnete Leuchtdioden 31 eine Transmissivbeleuchtung des Displays 15 und vier jeweils hinter einer Taste 16 angeordnete Leuchtdioden 31' Transmissivbeleuchtungen der lichtdurchlässigen Tasten 16.

An dem bis nahe zum Aufnahmeschacht 10 reichenden Ende ist an der Leiterplatte 30 eine weitere Leuchtdiode 32 angeordnet, die ihr Licht seitlich zum Aufnahmeschacht 10 hin abstrahlt.

Bei geschlossenem Deckel 3 und in den Aufnahmeschacht 10 eingefahrenem Träger 9 liegt die Leuchtdiode 32 der Einkoppelstelle 23 des Lichtleiters 19 gegenüber und koppelt ihr emittiertes Licht in den Lichtleiter 19 ein.

Dieses Licht wird im Lichtleiter 19 zu den Auskoppelstellen 25, 25' geleitet, tritt dort aus sowie durch die transparente Schaltmatte 27 hindurch und hinterleuchtet die transparenten Fenster 26 des Betätigungselements 6.

Ist der Deckel 3 geöffnet und der Träger 9 teilweise nach außen gefahren, gelangt ein in dem hinteren Bereich der Seitenwand 11 des Trägers 9 ausgebildeter durchgehende Beleuchtungsschacht 33 in Überdeckung mit dem Abstrahlbereich der Leuchtdiode 32, so dass deren abgestrahltes Licht durch den Beleuchtungsschacht 33 hindurch in den Aufnahmeschacht 10 strahlt und diesen ausleuchtet.

## Patentansprüche

1. Fahrtschreiber mit einem Gehäuse (1), in dem eine Druckvorrichtung und eine Aufnahmekammer (13) für eine Rolle eines von der Druckvorrichtung bedruckbaren bandartigen Druckmaterials angeordnet ist, wobei die Aufnahmekammer (13) eine zu einer Bedienerseite des Fahrtschreibers öffnenbare Bestückungsöffnung (4) aufweist, die durch einen Deckel (3) verschließbar ist, an dem mindestens ein von der Bedienerseite her betätigbares, beleuchtbares Betätigungselement (6) angeordnet ist, **dadurch ge- kennzeichnet**, dass an einem gehäusefesten Bauteil eine erste Lichtquelle angeordnet ist, deren emittiertes Licht bei geschlossenem Deckel (3) zum Betätigungselement (6) geleitet ist, und dass das emittierte Licht der ersten Lichtquelle bei geöffnetem Deckel (3) in die Aufnahmekammer (13) geleitet ist, so dass es einem Bediener erleichtert ist, eine neue Rolle Druckmaterial korrekt in die geöffnete Aufnahmekammer (13) einzulegen, da er die beleuchtete Aufnahmekammer (13) gut einsehen kann.

2. Fahrtschreiber nach Anspruch 1, **dadurch ge** - **kennzeichnet** , dass die erste Lichtquelle bei geschlossenem Deckel (3) einer Einkoppelstelle (23) einer an dem Deckel (3) angeordneten, zu dem Betätigungselement (6) führenden Lichtführung gegenüber liegt.

3. Fahrtschreiber nach Anspruch 2, **dadurch ge** - **kennzeichnet** , dass die Lichtführung ein in den Deckel integrierter oder an dem Deckel (3) angeordneter Lichtleiter (19) ist.

4. Fahrtschreiber nach einem der Ansprüche 2 und 3, **da** - **durch gekennzeichnet**, dass die Lichtführung eine oder mehrere Auskoppelstellen (25, 25') aufweist, die auf der der Bedienerseite abgewandten Seite auf ein oder mehrere zur Bedienerseite hin transparent durchleuchtbare Bereiche des Betätigungselements (6) gerichtet sind.

5. Fahrtschreiber nach einem der vorhergehenden Ansprüche, **dadurch gekennzeichnet , dass** der Deckel (3) eine um eine Schwenkachse schwenkbare Verschlussklappe ist oder an einem schubladenartigen Träger (9) angeordnet ist, der zur Bedienerseite hin aus einem Aufnahmeschacht (10) des Gehäuses (1) herausbewegbar ist.

6. Fahrtschreiber nach Anspruch 5, **dadurch gekennzeichnet, dass** der schubladenartige Träger (9) in Bewegungsrichtung des Trägers (9) gerichtete Seitenwände (11, 11') aufweist, wobei in einer der Seitenwände (11) ein durchgehender Beleuchtungsschacht (33) ausgebildet ist, der bei geöffnetem Deckel (3) den an dem Aufnahmeschacht (10) angeordneten ersten Lichtquellen gegenüberliegt.

7. Fahrtschreiber nach einem der vorhergehenden Ansprüche, **dadurch gekennzeichnet , dass** der Fahrtschreiber eine durchleuchtbare Bereiche aufweisende Blende (2) und/oder ein Display (15) und/oder eine Betätigungsschaltereinheit mit Betätigungsschaltern (16) aufweist, die zur Bedienerseite hin von einer oder mehreren auf einer Leiterplatte (30) angeordneten weiteren Lichtquellen transmissiv beleuchtbar sind, wobei die Leiterplatte (30) sich bis nahe der Aufnahmekammer (13) erstreckt und die erste Lichtquelle auf der Leiterplatte (30) angeordnet sind.

8. Fahrtschreiber nach einem der vorhergehenden Ansprüche, **dadurch gekennzeichnet, dass** durch das Betätigungselement (6) ein oder mehrere flexible Schaltdome (29) einer auf der der Bedienerseite abgewandten Seite des Betätigungselements (6) an dem Deckel (3) angeordneten Schaltmatte (27) beaufschlagbar sind.

9. Fahrtschreiber nach Anspruch 8, **dadurch ge-kennzeichnet**, dass die Schaltmatte (27) aus einem transparenten Werkstoff besteht und das Licht der ersten Lichtquelle durch die Schaltmatte (27) dem Betätigungselement (6) zuleitbar ist.

## Claims

1. Tachograph having a housing (1), in which a printing device and a receptacle chamber (13) for a roll of a strip-type printing material, which can be imprinted by the printing device, are arranged, wherein the receptacle chamber (13) has an equipping opening (4), which is openable toward an operator side of the tachograph, and which is closable by a cover (3), on which at least one actuating element (6), which can be actuated from the operator side and can be illuminated, is arranged, **characterized in that** a first light source, the emitted light of which is conducted to the actuating element (6) when the cover (3) is closed, is arranged on a housing-fixed component, and the emitted light of the first light source is conducted into the receptacle chamber (13) when the cover (3) is open, so that it is made easier for the operator to insert a new roll of printing material correctly into the open receptacle chamber (13), since he can see well into the illuminated receptacle chamber (13).

2. Tachograph according to Claim 1, **characterized in that** the first light source, when the cover (3) is closed, is opposite to a coupling point (23) of a light guide, which is arranged on the cover (3) and leads to the actuating element (6).

3. Tachograph according to Claim 2, **characterized in that** the light guide is an optical waveguide (19) integrated in the cover or arranged on the cover (3).

4. Tachograph according to any one of Claims 2 and 3, **characterized in that** the light guide has one or more decoupling points (25, 25'), which are oriented, on the side facing away from the operator side, toward one or more transmissive regions of the actuating element (6), which are transparent toward the operator side.

5. Tachograph according to any one of the preceding claims, **characterized in that** the cover (3) is a closure flap pivotable about a pivot axis or is arranged on a drawer-type support (9), which is movable toward the operator side out of a receptacle shaft (10) of the housing (1).

6. Tachograph according to Claim 5, **characterized in that** the drawer-type support (9) has side walls (11, 11') oriented in the movement direction of the support (9), wherein a continuous illumination shaft (33) is implemented in one of the side walls (11), which shaft, when the cover (3) is open, is opposite to the first light source arranged on the receptacle shaft (10).

7. Tachograph according to any one of the preceding claims, **characterized in that** the tachograph has a panel (2), which has transmissive regions, and/or a display screen (15) and/or an actuating switch unit having actuating switches (16), which can be transmissively illuminated toward the operator side by one or more further light sources arranged on a circuit board (30), wherein the circuit board (30) extends almost up to the receptacle chamber (13) and the first light source is arranged on the circuit board (30).

8. Tachograph according to any one of the preceding claims, **characterized in that** one or more flexible switch domes (29) of a pressure-sensitive mat (27), which is arranged on the cover (3) on the side of the actuating element (6) facing away from the operator side, can be impinged by the actuating element (6).

9. Tachograph according to Claim 8, **characterized in that** the pressure-sensitive mat (27) consists of a transparent material and the light of the first light source can be conducted through the pressure-sensitive mat (27) to the actuating element (6).

## Revendications

1. Tachygraphe, comprenant un boîtier (1), dans lequel sont disposés un dispositif d'impression et une chambre (13) de réception d'un rouleau d'une matière à imprimer de type en ruban pouvant être imprimée par le dispositif d'impression, la chambre (13) de réception ayant une ouverture (4) d'équipement, qui peut s'ouvrir vers un côté de l'opérateur du tachygraphe et qui peut être fermée par un couvercle (3), sur lequel est disposé au moins un élément (6) d'actionnement pouvant être éclairé et actionné depuis le côté de l'opérateur, **caractérisé en ce que**, sur une pièce fixe du boîtier, est montée une première source lumineuse, dont la lumière émise est conduite, lorsque le couvercle (3) est fermé, à l'élément (6) d'actionnement et **en ce que** la lumière émise de la première source lumineuse est conduite, lorsque le couvercle (3) est ouvert, dans la chambre (3) de réception, de manière à ce qu'il soit plus facile pour un opérateur d'introduire un nouveau rouleau de matière à imprimer correctement dans la chambre (13) de réception ouverte, puisqu'il peut bien voir la chambre (13) de réception éclairée.

2. Tachygraphe suivant la revendication 1, **caractérisé en ce que** la première source lumineuse se trouve, lorsque le couvercle (3) est fermé, dans une position (23) d'injection dans un guide de lumière monté sur le couvercle (3) et menant à l'élément (6) d'actionnement.

3. Tachygraphe suivant la revendication 2, **caractérisé en ce que** le guide de lumière est une fibre (9) optique intégrée au couvercle ou montée sur le couvercle (3).

4. Tachygraphe suivant l'une des revendications 2 et 3, **caractérisé en ce que** le guidage de lumière a un ou plusieurs points (25, 25') de sortie, qui, du côté éloigné du côté de l'opérateur, sont dirigés sur une zone ou plusieurs zones de l'élément (6) d'actionnement pouvant être éclairées en transparence vers le côté de l'opérateur.

5. Tachygraphe suivant l'une des revendications précédentes, **caractérisé en ce que** le couvercle (3) est un volet de fermeture pouvant pivoter autour d'un axe de pivotement ou est monté sur un support (9) de type en tiroir, qui peut sortir, vers le côté de l'opérateur, d'un puits (10) de réception du boîtier (1).

6. Tachygraphe suivant la revendication 5, **caractérisé en ce que** le support (9) de type en tiroir a des parois (11, 11') latérales dirigées dans la direction de déplacement du support (9), dans lequel, dans l'une des parois (11) latérales, est formé un puits (33) d'éclairage traversant, qui, lorsque le couvercle (3) est ouvert, est en opposition à la première source lumineuse disposée sur le puits (10) de réception.

7. Tachygraphe suivant l'une des revendications précédentes, **caractérisé en ce que** le tachygraphe a un diaphragme (2) ayant des zones de transmission de la lumière et/ou un affichage (15) et/ou une unité de commutateurs d'actionnement ayant des commutateurs (16) d'actionnement, qui peuvent être éclairés par transmission vers le côté de l'opérateur par une ou plusieurs autres sources lumineuses montées sur un plaquette (30) à circuits imprimés, la plaquette (30) à circuits imprimés s'étendant jusqu'à proximité de la chambre (13) de réception et la première source lumineuse étant montée sur la plaquette (30) à circuits imprimés.

8. Tachygraphe suivant l'une des revendications précédentes, **caractérisé en ce qu'**un ou plusieurs dômes (29) de commutation souples d'un tapis (27) de commutation, disposé sur le couvercle (3) du côté éloigné du côté de l'opérateur, peuvent être soumis à l'élément (6) d'actionnement.

9. Tachygraphe suivant la revendication 8, **caractérisé en ce que** le tapis (27) de commutation est en un matériau transparent et la lumière de la première source lumineuse peut être envoyée à l'élément (6) d'actionnement à travers le tapis (27) de commutation.
